# EUROPÄISCHE PATENTSCHRIFT

(11) **EP 0 680 027 B1**
(45) Veröffentlichungstag und Bekanntmachung des Hinweises auf die Patenterteilung: **07.06.2000**
(21) Anmeldenummer: 95104178.9
(22) Anmeldetag: 22.03.1995
(51) Int. Cl.: G08G 1/054

(54) **Anordnung zur Messung der Entfernung eines Objektes und dessen Abbildung**
Apparatus for measuring the distance between an object and its picture
Dispositif de mesure de la distance entre un objet et son image

(30) Priorität: 08.04.1994 DE 4412100
(43) Veröffentlichungstag der Anmeldung: 02.11.1995
(73) Patentinhaber: JENOPTIK Aktiengesellschaft, 07743 Jena (DE)
(72) Erfinder: Schubert, Jörg, D-07745 Jena (DE); Schaller, Uwe, D-07747 Jena (DE); Seidel, Wolfgang, D-07747 Jena (DE)
(74) Vertreter: Oehmke, Volker

(56) Entgegenhaltungen:
- DE-A- 3 908 069
- US-A- 3 464 770

## Beschreibung

Die Erfindung betrifft eine Anordnung zur Messung der Entfernung eines Objektes und dessen Abbildung mit einem Meßmodul zur Impulslaufzeitmessung, welcher einen Sende- und einen Empfangskanal aufweist, sowie einem Kameramodul, mit einem Kameraobjektiv und einem Bildaufnahmemedium z.B. einer CCD-Matrix oder Fotopapier für Sofortbilder in der Kamerabrennebene.

Eine derartige Anordnung läßt sich aus der DE-A 39 08 069 entnehmen.
Vorgesehen ist hier ein Photo-oder Videoaufzeichnungsgerät mit einer integrierten Infrarot- oder Ultraschallentfernungsmeßeinrichtung so zu ergänzen, daß aus zeitlich aufeinanderfolgenden Entfernungsmessungen die Geschwindigkeit eines Objektes bestimmt werden kann, ein Bild ausgelöst wird und die ermittelte Geschwindigkeit angezeigt wird.
Diese Lösung weist den entscheidenden Nachteil auf, daß das Objekt, dessen Geschwindigkeit gemessen werden soll, über das Aufzeichnungsgerät zwar betrachtet aber nicht anvisiert werden kann, da keine Visiermarke vorhanden ist. Dadurch ist keine Zuordnung der Entfernung oder Geschwindigkeit zu einem bestimmten im Objektfeld befindlichen Objekt möglich.

Eine weitere Anordnung oben genannter Art ist aus Prospektmaterial der Firma TELE-TRAFFIC (UK) LTD., 1 Church Street, Warwick, CV34 4AB, England, von 1993, unter dem Namen LTI 20.20 bekannt.
Dieses Gerät umfaßt die Module Laserentfernungsmesser, Lichtpunktvisier und Videokamera, die mechanisch fest miteinander verbunden sind. Die Meßachse, die Visierachse und Abbildungsachse (Kameraachse), bestimmt durch die Kardinalelemente der einzelnen Module, verlaufen unabhängig voneinander. Demnach ist eine genaue Justierung zueinander unerläßlich. Es sind Maßnahmen zu treffen, welche eine stabile Achslage zueinander garantieren.

Bei dem Meßgerät LEICA XV2 im Prospekt der PMS AG, Photo-Mess-Systeme, Bahnhofstraße 8, CH-9430 St. Margarethen, angeboten, wird das anzumessende Objekt durch die Videokamera anvisiert. Zu diesem Zweck wird in der Videokamera ein elektronisches Zielkreuz generiert. Gegenüber der voran beschriebenen Lösung fallen hier die Visier- und die Abbildungsachse zusammen. Die Forderung nach einer hohen Justiergenauigkeit und Stabilität zur Meßachse steht auch hier. Die Achsen sind bei der Montage genau in Übereinstimmung zu bringen und während der Nutzung regelmäßig zu kontrollieren.

Eine Variation der Kamerabrennweite dürfte bei allen beschriebenen Lösungen nicht möglich sein, da durch die Verschiebung des Hauptpunktes beim Zoomen des Objektivs die Abbildungsachse auswandert. Eine Anpassung der Kameravergrößerung an die aktuelle Meßsituation ist also nicht möglich.
Die Modulbauweise des LTI 20.20, bei welchem das Objekt nicht über die Videokamera anvisiert wird, erlaubt dem Hersteller sein Gerät sowohl mit, als auch ohne Videokamera anzubieten. Auch dem Nutzer selber ist es dadurch möglich, das Gerät wahlweise, je nach Bedürfnis mit oder ohne aufgesetzte Videokamera zu gebrauchen. Beim Einrichten der Kamera ist, wie bereits erläutert, eine hochgenaue Achsjustierung von Meß,- Visier- und Abbildungsachse erforderlich. Da die Achsstabilität nicht garantiert werden kann, muß vor jedem Meßeinsatz zu behördlichen Zwecken die Lage der Achsen zueinander geprüft werden.

Der Erfindung liegt die Aufgabe zugrunde, eine Anordnung mit einem Meß- und einem Kameramodul zu schaffen, die dem Nutzer gestattet, den Meßmodul wahlweise mit oder ohne Kameramodul zu behördlichen Messungen einzusetzen, ohne daß er irgendwelche Justierungen oder Überprüfungen an der Anordnung vornehmen muß.

Diese Aufgabe wird durch die Anordnungen gemäß den Ausprüchen 1 und 2 gelöst.

Diese Aufgabe wird gemäß der Erfindung dadurch gelöst, daß der Beobachtungs- und Visierstrahlengang in den Meßstrahlengang entweder im Sende- oder im Empfangskanal des Meßmoduls derart integriert ist, daß der Sender bzw. der Empfänger und die Visiermarke (Fadenkreuz) in zueinander optisch konjugierten Punkten justiert sind und die Visiermarke über eine unendliche Abbildung auf dem Bildaufnahmemedium des Kameramoduls abgebildet wird, so daß die Abbildungsachse ebenso wie die Visierachse durch den Hauptpunkt des Objektives des Meßkanals und die Lage des Fadenkreuzes bestimmt ist.
Dadurch bedarf es lediglich der Justierung von Meß- und Visierachse innerhalb des Meßmoduls. Die Identität der Achsen wird vom Eichamt geprüft. Anschließend wird das Gerät versiegelt. Eine nochmalige Prüfung nach Aufsatz des Kameramoduls ist durch die erfindungsgemäße Einkopplung des Abbildungsstrahlengangs in den Visierstrahlengang nicht erforderlich. Auch ohne eine Justierung zwischen Kamera- und Meßmodul ist die Achsidentität garantiert. Auch bei Veränderung des Abbildungsmaßstabes des Kameraobjektives kann es nicht zu einer Achsauswanderung kommen. Die vom Kameramodul aufgenommene Szene ist identisch mit der vom Nutzer registrierten und dokumentiert somit authentisch den Meßvorgang.
Vorteilhaft ist der Aufbau der Anordnung in Modulbauweise gemäß Anspruch 3. Dadurch ist es dem Nutzer möglich, über den Adaptermodul den Meßmodul wahlweise mit verschiedenen, auch handelsüblichen Kameramodulen zu kombinieren.
Ohne Adaptermodul und Kameramodul kann der Meßmodul, ergänzt durch ein Zusatzokular, als selbständiges Einzelgerät zum Messen und Anvisieren eines Objektes verwendet werden.

In der Zeichnung ist eine als Beispiel dienende Ausführungsform der Erfindung schematisch dargestellt.
Es zeigt :
- Fig. 1: eine erfindungsgemäße Anordnung in Modulbauweise und
- Fig. 2: ein Optikschema der in Fig. 1 dargestellten erfindungsgemäßen Anordnung.

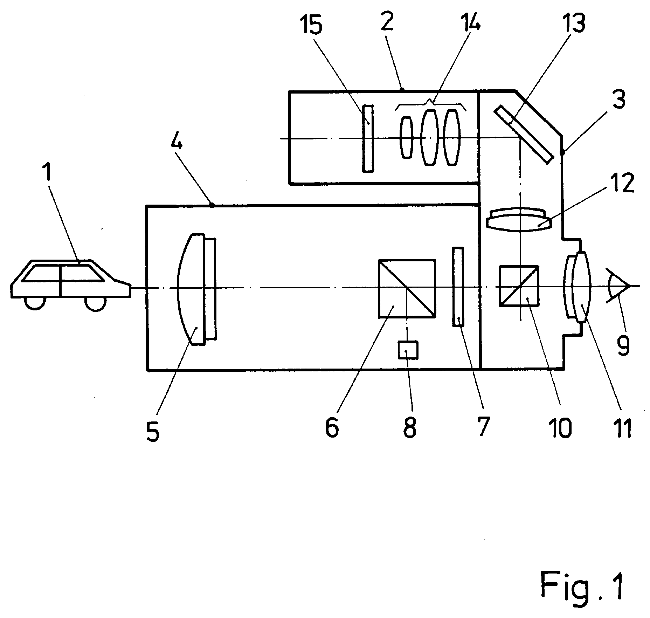

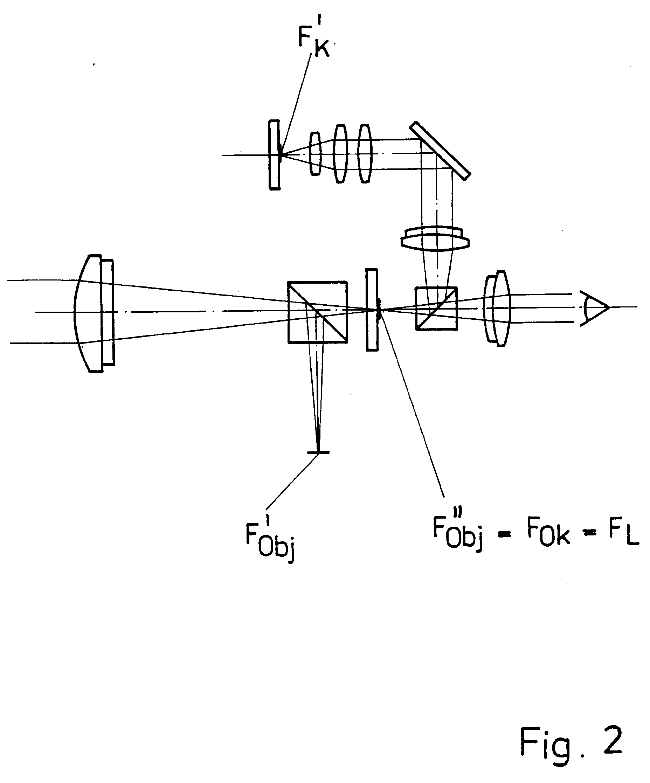

Die in Fig. 1 dargestellte erfindungsgemäße Anordnung umfaßt einen Kameramodul 2, einen Adaptermodul 3 und einen Meßmodul. Bei dem Meßmodul handelt es sich um ein aus dem Prospekt der JENOPTIK Technologie GmbH, D-07739 Jena, von 1993 bekanntes Lasergeschwindigkeitsmeßgerät LAVEG ohne das zum Visierkanal gehörige Okular (genannt Zusatzokular). Bei diesem Gerät wird das interessierende Objekt über den gleichen optischen Kanal anvisiert, über den auch der Meßimpuls ausgesendet wird. Das garantiert dem Nutzer, daß er jederzeit auch tatsächlich das Objekt anmißt, welches er anvisiert. Da nur der Visierkanal 4 (Sendekanal) für das Verständnis der erfindungsgemäßen Anordnung von Bedeutung ist, soll die Erläuterung zum Meßmodul und seine Darstellung in der Zeichnung auf den Visierkanal 4 beschränkt werden.
Der Visierkanal 4 besteht aus dem Objektiv 5, einem ersten Strahlteiler 6, einer Strichplatte 7 und einem Sender 8 (hier Laserdiode). Der erste Strahlteiler 6 ist für das sichtbare Licht transparent, während er das Meßlicht (hier Infrarotlicht) reflektiert. Durch die Anordnung des ersten Strahlteilers 6 innerhalb der Objektivbrennweite ergeben sich für das den Strahlteiler passierende visuelle Licht und das von diesem reflektierte IR-Licht unterschiedliche Objektivbrennebenen F'_{obj} und F''_{obj}. Wie auch aus Fig. 2 ersichtlich, ist die Strichplatte 7 in der Objektivbrennebene F''_{obj} und der Sender 8 in der Objektivbrennebene F'_{obj} angeordnet, so daß die Meßrichtung durch die Lage des Senders 8 sowie den Hauptpunkt des Objektives 5 und die Visierrichtung durch das Fadenkreuz auf der Strichplatte 6, sowie den Hauptpunkt des Objektives 5 bestimmt sind. Durch eine genaue Justierung der Strichplatte 7 und des Senders 8 in zueinander optisch konjugierte Punkte, fallen die Meß- und Visierrichtung zusammen.
Jedes Meßgerät, welches durch eine deutsche Behörde zu amtlichen Messungen verwendet werden soll, bedarf der vorherigen Zulassung durch die Physikalisch Technische Bundesanstalt und der turnusmäßigen Eichung jedes einzelnen Gerätes durch ein Landeseichamt. Für die Zulassung des beschriebenen Meßmoduls ist die genaue Übereinstimmung von Meß- und Visierachse wesentlicher Bestandteil der Prüfung. Spätere Eingriffe durch Dritte werden durch eine Versiegelung des Meßmoduls ausgeschlossen.

Für Einsatzzwecke, in denen ein bildlicher Nachweis des anvisierten Objektes 1 nicht erforderlich ist, kann der Meßmodul ergänzt durch ein Zusatzokular, wie im Prospekt der JENOPTIK Technologie GmbH als Laserentfernungsmeßgerät LAVEG angeboten, ohne Kameramodul 2 und Adaptermodul 3 verwendet werden. An der in Fig. 1 dargestellten Schnittstelle zwischen dem Adaptermodul 3 und dem Visierkanal 4 befindet sich dann das Zusatzokular, welches die Strichplatte 7 und das aus dem Unendlichen auf die Strichplatte 7 abgebildete Objekt 1 in das Auge des Betrachters 9 abbildet.

Für den Fall, daß ein bildlicher Nachweis gewünscht wird, kann der Nutzer das Zusatzokular entfernen und einen Adaptermodul 3, sowie einen Kameramodul 2 anfügen. Es bedarf auf Grund der erfindungsgemäßen Verschmelzung der einzelnen Module miteinander keinerlei Justierung der Module zueinander.

Der Adaptermodul 3 umfaßt einen zweiten Strahlteiler 10 (hier Teilerwürfel), ein Okular 11, eine aplanatische Lupe 12 und einen Spiegel 13.

Der Kameramodul 2 umfaßt ein auf unendlich eingestelltes Kameraobjektiv 13 und eine in dessen Brennebene F'_{K} angeordnete CCD-Matrix 15. Anstelle eines solchen Videomoduls kann als Kameramodul ebenso eine fotografische Kamera, insbesondere eine Sofortbildkamera verwendet werden.

Das über die Schnittstelle zwischen Meßmodul und Adaptermodul 3 kommende Licht durchdringt den Teilerwürfel 10 zu 50% und trifft auf das Okular 11, über welches die in der Okularbrennebene F_{oc} angeordnete Strichplatte 7 ins Unendliche abgebildet wird. Der Betrachter sieht beim Blick ins Okular Fadenkreuz und Objekt 1 gleichzeitig scharf. Die Verminderung der Bildhelligkeit gegenüber der Betrachtung durch den Meßmodul allein mit Zusatzokular, ohne Adaptermodul 3, ist dabei nicht störend.
Das durch Reflexion am Teilerwürfel 10 entstehende zweite Strahlenbündel bildet die Strichplatte 7, die ebenfalls in der Lupenbrennebene F_{L} steht, über die aplanatische Lupe 12 ins Unendliche und die Austrittspupille des Visierkanals 4 in die Öffnungsblende des Kameramoduls 2 ab. Dadurch kommt es auch beim Zoomen des Kameraobjektives 14 zum Zweck der Änderung der Vergrößerung nicht zur sogenannten Schlüssellochbeobachtung (Randabschattung).
Die ins Unendliche abgebildete Strichplatte 7 wird vom Spiegel 13 in das Kameraobjektiv 14 reflektiert und anschließend auf der CCD-Matrix 15 scharf abgebildet.
Der Spiegel 13 hat in dieser Anordnung lediglich die Funktion, den Strahlengang so umzulenken, daß der Kameramodul 2 so auf dem Meßmodul angebracht werden kann, daß ein kompaktes gut handhabbares Gerät entsteht Eine Dejustage der in sich justierten einzelnen Module zueinander kann zwar zu Ablageänderungen des Bildes der Strichplatte 7 auf der CCD-Matrix 15 führen, jedoch ist die Relativlage der Abbilder von Objekt 1 und Fadenkreuz immer konstant, so daß die Abbildung des Objektes auf dem Fadenkreuz auch sicher das anvisierte und angemessene Objekt 1 ist.
Da die Lage des Hauptpunktes des Kameraobjektives 14, im Gegensatz zu den aus dem Stand der Technik bekannten Lösungen, bei denen über die Kamera anvisiert wird, ohne Auswirkung auf die Relativlage der Bilder bleibt, ist eine Veränderung des Abbildungsmaßstabes (Zoomen des Kameraobjektives) ohne nachteilige Auswirkungen.
Unbeabsichtigte Fehlmessungen, aber auch Manipulationen durch eine Lageänderung der Module zueinander, sind ausgeschlossen, so daß es bei Ergänzung des geeichten und versiegelten Meßmoduls durch den Adaptermodul 3 und den Kameramodul 2 keiner erneuten Justage bedarf. Dadurch wird eine Nachrüstung der bereits in Kundenhand befindlichen Lasergeschwindigkeitsmeßgeräte LAVEG auf einfachste Weise möglich.
Der besondere Vorteil der erfindungsgemäßen Anordnung besteht in seiner hohen Flexibilität, die es dem Nutzer erlaubt, das Gerät schnell und unkompliziert den aktuellen Anforderungen anzupassen. So kann der Meßmodul, ergänzt durch ein Zusatzokular, ähnlich einem Feldstecher aussehend und damit häufig als Meßgerät unbemerkt, zur Beobachtung und Messung z. B. beim sofortigen Stellen der Verkehrssünder verwendet werden.
Bei notwendiger Nachweisführung wird mit wenigen Handgriffen das Zusatzokular gegen den Adaptermodul 2 und den Kameramodul 1 ausgetauscht. Bei den aus dem Stand der Technik bekannten Lösungen hingegen, ist weder eine solche Variation ohne Justierung möglich, noch kann das Kameraobjektiv 14 gezoomt werden, da sich durch das Zoomen der Hauptpunkt des Kameraobjektives 14 verschiebt und eine sich daraus ergebende mögliche Verkippung der Kameraachse (Abbildungsachse) nicht zulässig ist.

Eine weitere Ausführungsform ergibt sich, wenn statt dem Sendekanal der Empfangskanal des Meßmoduls als Visierkanal genutzt wird. An Stelle des Senders steht dann lediglich der Empfänger in einer zur Strichplatte 7 konjugierten Ebene.

Theoretisch ist es auch vorstellbar, den Meßmodul derart auszubilden, daß das Meßsignal über den gleichen Kanal ausgesendet wie auch empfangen wird. Praktisch sind jedoch die Intensitätsverluste durch die erforderliche Strahlteilung so hoch, daß eine solche technische Realisierung unsinnig wäre.

Durch die mögliche Ausführung einer erfindungsgemäßen Anordnung in Modulbauweise und die Möglichkeit, daß der Nutzer selbst die Module ohne eine Justierung zueinander zusammenfügen kann, ist es möglich, verschiedene Kameramodule dem Nutzer zum wahlweisen Gebrauch anzubieten.

Zusammengefaßt bietet die erfindungsgemäße Anordnung gegenüber sonst vom Markt oder aus der Literatur bekannten Laserentfernungs- oder Geschwindigkeitsmeßgeräten für den Nutzer den besonderen Vorteil, daß er, ohne daß irgendwelche Justierungen oder Prüfungen durch ihn vorgenommen werden müßten, wahlweise die komplette Anordnung, aber auch nur den Meßmodul, ergänzt durch ein Zusatzokular, zu behördlichen Messungen verwenden kann.

## Patentansprüche

1. Anordnung zur Messung der Entfernung eines Objektes (1) und dessen Abbildung
mit einem Meßmodul zur Impulslaufzeitmessung, welcher einen Sendekanal (4) mit einem Objektiv (5) und einem Sender (8) in der Objektivbrennebene und einen Empfangskanal aufweist,
sowie einem Kameramodul (2), mit einem Kameraobjektiv (14) und einem Bildaufnahmemedium, z.B. einer CCD-Matrix (15) oder Fotopapier für Sofortbilder, in der Kamerabrennebene, dadurch gekennzeichnet,
daß im Sendekanal (4) innerhalb der Objektivbrennweite ein erster Strahlteiler (6) vorhanden ist, welcher das vom Sender (8) emittierte Meßstrahlenbündel über das Objektiv (5) auf das anvisierte Objekt (1) richtet und das vom anvisierten Objekt (1) kommende visuelle Licht auf eine Strichplatte (7) lenkt, die in einer konjugierten Ebene zum Sender (8) angeordnet ist,
daß der Strichplatte (7) ein zweiter Strahlteiler (10) nachgeordnet ist, welcher ein erstes Teilstrahlenbündel auf ein nachgeordnetes Okular (11) und ein zweites Teilstrahlenbündel über eine aplanatische Lupe (12), ein Umlenkelement (13) und das Kameraobjektiv (14) auf das Bildaufnahmemedium lenkt,
daß die Strichplatte (7) in der Okularbrennebene und in der Lupenbrennebene angeordnet ist, so daß die Strichplatte (7) auf dem Bildaufnahmemedium scharf abgebildet und vom Auge des Betrachters (9) gemeinsam mit dem anvisierten Objekt (1) als im Unendlichen stehend gesehen wird.

2. Anordnung zur Messung der Entfernung eines Objektes (1) und dessen Abbildung
mit einem Meßmodul zur Impulslaufzeitmessung, welcher einen Sendekanal (4) und einen Empfangskanal mit einem Objektiv und einem Empfänger in der Objektivbrennebene aufweist,
sowie einem Kameramodul (2), mit einem Kameraobjektiv (14) und einem Bildaufnahmemedium, z.B. einer CCD-Matrix (15) oder Fotopapier für Sofortbilder, in der Kamerabrennebene, dadurch gekennzeichnet,
daß im Empfangskanal innerhalb der Objektivbrennweite ein erster Strahlteiler (6) vorhanden ist, welcher das vom anvisierten Objekt (1) reflektierte Meßstrahlenbündel auf den Empfänger und das vom Objekt (1) kommende visuelle Licht auf eine Strichplatte (7) lenkt, die in einer konjugierten Ebene zum Empfänger angeordnet ist,
daß der Strichplatte ein zweiter Strahlteiler (10) nachgeordnet ist, welcher ein erstes Teilstrahlenbündel auf ein nachgeordnetes Okular (11) und ein zweites Teilstrahlenbündel über eine aplanatische Lupe (12), ein Umlenkelement (13) und das Kameraobjektiv (14) auf das Bildaufnahmemedium lenkt,
daß die Strichplatte (7) in der Okularbrennebene und in der Lupenbrennebene angeordnet ist, so daß die Strichplatte (7) auf dem Bildaufnahmemedium scharf abgebildet und vom Auge des Betrachters (9) gemeinsam mit dem anvisierten Objekt (1) als im Unendlichen stehend gesehen wird.

3. Anordnung nach Anspruch 1 oder 2, dadurch gekennzeichnet,
daß der zweite Strahlteiler (10), das Okular (11), die Lupe (12) und das Umlenkelement (13) in einem Adaptermodul (3) angeordnet sind, welcher verbunden mit dem Kameramodul (2) und dem Meßmodul die Gesamtanordnung bildet.

4. Anordnung nach Anspruch 3, dadurch gekennzeichnet,
daß der Meßmodul allein, ergänzt durch ein Zusatzokular an der eigentlichen Schnittstelle zum Adaptermodul (3), ohne Adaptermodul (3) und Kameramodul (2) als selbständiges Einzelgerät zum Messen und Anvisieren eines Objektes (1) verwendet werden kann.

5. Anordnung nach Anspruch 3, dadurch gekennzeichnet,
daß als Kameramodul (2) eine handelsübliche Kamera verwendet werden kann.

## Claims

1. Arrangement for measuring the distance between an object (1) and its image, having a measuring module for measuring pulse time delay, which has a transmit channel (4) with an objective (5) and a transmitter (8) in the objective focal plane, and a receive channel, as well as a camera module (2) with a camera lens (14) and an image-recording medium, for example a CCD matrix (15) or photographic paper, for instant pictures, in the camera focal plane, characterized in that there is present in the transmit channel (4) within the objective focal length a first beam splitter (6) which directs the measuring beam emitted by the transmitter (8) via the objective (5) onto the sighted object (1) and guides the visible light coming from the sighted object (1) onto a reticle (7) which is arranged in a conjugate plane relative to the transmitter (8), in that arranged downstream of the reticle (7) is a second beam splitter (10) which guides a first component beam onto a downstream ocular (11) and guides a second component beam onto the image-recording medium via an aplanatic magnifier (12), a deflecting element (13) and the camera lens (14), and in that a reticle (7) is arranged in the ocular focal plane and in the magnifier focal plane such that the reticle (7) is sharply imaged on the image-recording medium and is seen by the eye of the viewer (9) in common with the sighted object (1) as being at infinity.

2. Arrangement for measuring the distance between an object (1) and its image, having a measuring module for measuring pulse time delay, which has a transmit channel (4) and a receive channel with an objective, and a receiver in the objective focal plane, as well as a camera module (2) with a camera lens (14) and an image-recording medium, for example a CCD matrix (15) or photographic paper for instant pictures, in the camera focal plane, characterized in that there is present in the receive channel within the objective focal length a first beam splitter (6) which guides the measuring beam reflected by the sighted object (1) onto the receiver, and guides the visible light coming from the object (1) onto a reticle (7) which is arranged in a conjugate plane relative to the receiver, in that arranged downstream of the reticle is a second beam splitter (10) which guides a first component beam onto a downstream ocular (11) and guides a second component beam onto the image-recording medium via an aplanatic magnifier (12), a deflecting element (13) and the camera lens (14), and in that the reticle (7) is arranged in the ocular focal plane and in the magnifier focal plane such that the reticle (7) is sharply imaged on the image-recording medium and is seen by the eye of the viewer (9) in common with the sighted object (1) as being at infinity.

3. Arrangement according to Claim 1 or 2, characterized in that the second beam splitter (10), the ocular (11), the magnifier (12) and the deflecting element (13) are arranged in an adapter module (3) which, connected to the camera module (2) and the measuring module, forms the overall arrangement.

4. Arrangement according to Claim 3, characterized in that the measuring module alone, supplemented by an additional ocular at the actual interface with the adapter module (3), can be used without the adapter module (3) and camera module (2) as an independent individual unit for measuring and sighting an object (1).

5. Arrangement according to Claim 3, characterized in that a commercially available camera can be used as the camera module (2).

## Revendications

1. Dispositif de mesure de la distance entre un objet (1) et son image,
avec un module de mesure pour la mesure de la durée impulsionnelle, qui présente un canal d'émission(4) avec un objectif (5) et un émetteur (8) dans le plan focal de l'objectif et un canal de réception,
ainsi qu'un module de caméra (2), avec un objectif de caméra (14) et un moyen d'enregistrement d'image, par exemple une matrice à CCD (15) ou un papier photographique pour développement instantané, dans le plan focal de la caméra, caractérisé en ce que
l'on prévoit dans le canal d'émission (4), dans les limites de la largeur du foyer de l'objectif, un premier diviseur de faisceau (6) qui oriente le faisceau de rayons de mesure émis par l'émetteur (8) par le biais de l'objectif (5) sur l'objet visé (1) et dirige la lumière visuelle provenant de l'objet visé (1) sur un réticule (7) qui est disposé dans un plan conjugué à l'émetteur (8),
le réticule (7) est suivi d'un deuxième diviseur de faisceau (10) qui dirige un premier faisceau de rayons partiel sur un oculaire (11) placé après et un deuxième faisceau de rayons partiel par le biais d'une loupe aplanétique (12), d'un élément de déviation (13) et de l'objectif de la caméra (14), sur le moyen d'enregistrement d'image,
le réticule (7) est disposé dans le plan focal de l'oculaire et dans le plan focal de la loupe, de sorte que le réticule (7) soit reproduit nettement sur le moyen d'enregistrement d'image et soit vu par l'oeil de l'observateur (9) conjointement avec l'objet visé (1) comme se trouvant à l'infini.

2. Dispositif de mesure de la distance entre un objet (1) et son image,
avec un module de mesure pour la mesure de la durée impulsionnelle, qui présente un canal d'émission (4) et un canal récepteur avec un objectif et un de réception dans le plan focal de l'objectif,
ainsi qu'un module de caméra (2), avec un objectif de caméra (14) et un moyen d'enregistrement d'image, par exemple une matrice à CCD (15) ou un papier photographique pour développement instantané, dans le plan focal de la caméra, caractérisé en ce que
l'on prévoit dans le canal de réception, dans les limites de la largeur du foyer de l'objectif, un premier diviseur de faisceau (6) qui dirige le faisceau de rayons de mesure réfléchi par l'objet visé (1) sur le récepteur et dirige la lumière visuelle provenant de l'objet (1) sur un réticule (7) qui est disposé dans un plan conjugué au récepteur,
le réticule est suivi d'un deuxième diviseur de faisceau (10) qui dirige un premier faisceau de rayons partiel sur un oculaire (11) placé après et un deuxième faisceau de rayons partiel par le biais d'une loupe aplanétique (12), d'un élément de déviation (13) et de l'objectif de caméra (14), sur le moyen d'enregistrement d'image,
le réticule (7) est disposé dans le plan focal de l'oculaire et dans le plan focal de la loupe, de sorte que le réticule (7) soit reproduit nettement sur le moyen d'enregistrement d'image et soit vu par l'oeil de l'observateur (9) conjointement avec l'objet visé (1) comme se trouvant à l'infini.

3. Dispositif selon la revendication 1 ou 2, caractérisé en ce que le deuxième diviseur de faisceau (10), l'oculaire (11), la loupe (12) et l'élément de déviation (13) sont disposés dans un module adaptateur (3) qui forme, en liaison avec le module de caméra (2) et le module de mesure, le dispositif d'ensemble.

4. Dispositif selon la revendication 3, caractérisé en ce que le module de mesure peut être utilisé seul, complété par un oculaire supplémentaire à l'interface proprement dite avec le module adaptateur (3), sans module adaptateur (3) ni module de caméra (2), en tant qu'appareil unique autonome pour la mesure et la visée d'un objet (1).

5. Dispositif selon la revendication 3, caractérisé en ce que l'on peut utiliser, en tant que module de caméra (2), une caméra disponible dans le commerce.
